# FASCICULE DE BREVET EUROPEEN

(11) **EP 2 653 237 B1**
(45) Date de publication et mention de la délivrance du brevet: **23.03.2022**
(21) Numéro de dépôt: 13164321.5
(22) Date de dépôt: 18.04.2013
(51) Int. Cl.: B08B 3/02, B08B 3/00

(54) **Dispositif de nettoyage de pièces aéronautiques**
Reinigungsvorrichtung für Luftfahrzeugteile
Device for cleaning aircraft parts

(30) Priorité: 20.04.2012 FR 1253637
(43) Date de publication de la demande: 23.10.2013
(73) Titulaire: Garcia, Honore, 64122 Urrugne (FR)
(72) Inventeur: Garcia, Honore, 64122 Urrugne (FR)
(74) Mandataire: IPAZ

(56) Documents cités:
- EP-A1- 1 352 692
- FR-A1- 2 756 503
- US-A- 5 443 653

## Description

La présente invention concerne un dispositif permettant le nettoyage des pièces aéronautiques après usinage ou perçage (que les pièces soient métalliques ou en matériaux composites).

Après l'usinage ou le perçage des pièces avions, le liquide de coupe mélangé aux copeaux restent « collés » sur les parois. Un nettoyage systématique des pièces avion est nécessaire. Les opérateurs emploient un solvant couramment appelé « Diestone » qui est appliqué soit au pinceau soit en lingettes.

Dans le cas de l'application au pinceau, le produit se répand sur les pièces et la consommation de solvant est très importante. Outre l'aspect consommation, les émanations sont perturbantes voire nocives pour l'utilisateur. Bien que donnant de meilleurs résultats que les lingettes, ce procédé d'application a été interdit à cause d'une consommation trop importante de solvant.

Dans le cas de l'application avec les lingettes, la consommation de linettes est exorbitante, mais reste la seule autorisée. Les émanations sont perturbantes pour les opérateurs. Le document d'état de la technique US 5 443 653 A décrit un dispositif pneumatique de nettoyage qui comporte un moyen pneumatique de projection d'un solvant sur la pièce à nettoyer et un moyen pneumatique d'aspiration d'un liquide souillé par de l'huile, des copeaux et/ou des poussières, ledit dispositif formant un système qui permet d'apporter du solvant sur les pièces souillées puis d'aspirer le mélange.

Le but de l'invention est donc, notamment, de proposer un dispositif qui permette de réduire la consommation de consommables (solvant ou lingettes), facilite la tâche de nettoyage des compagnons, diminue le temps de nettoyage et récupère la majorité du solvant souillé.

L'invention propose un dispositif de nettoyage de pièces aéronautiques selon la revendication 1. Les modes de réalisation sont décrits par les revendications dépendantes.

Le dispositif peut comprendre un moyen de filtration du liquide souillé permettant la filtration du liquide souillé avant son stockage.

Le dispositif peut également comprendre un circuit fermé permettant au liquide souillé, une fois retraité par filtration, d'être réutilisé par le moyen de projection.

Le moyen de projection peut comprendre un pistolet équipé d'une gâchette, l'actionnement de la gâchette permettant la projection du liquide.

Le pistolet peut comprendre une pluralité de poils formant brosse, le jet de liquide issu du pistolet étant dirigé vers les poils.

Le moyen d'aspiration peut comprendre un conduit prévu sur le pistolet équipé de la brosse.

Le moyen d'aspiration comprend un système de dépression à effet venturi alimenté par air comprimé.

D'autres caractéristiques et avantages de l'invention apparaîtront dans la description qui suit d'un mode de réalisation préféré avec référence aux dessins annexés mais qui n'a aucun caractère limitatif.

Sur ces dessins :
Fig. 1 est un schéma d'un premier mode de réalisation d'un dispositif selon l'invention.
Fig. 2 est un schéma d'un second mode de réalisation d'un dispositif selon l'invention, et

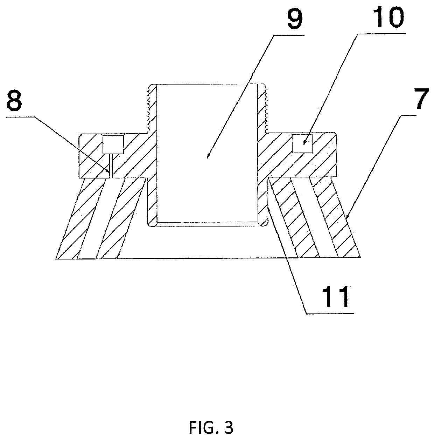

Fig. 3 est une vue en coupe transversale d'une brosse utilisée dans un dispositif selon l'invention.

L'invention se présente sous la forme d'un système qui permet d'apporter du solvant sur les pièces souillées puis d'aspirer le mélange.

A l'instar de l'application au pinceau, l'invention emmène du solvant vers une brosse spécifique. N'importe quel solvant peut être utilisé par le système, néanmoins les plus utilisés sont ceux de la gamme DIESTONE (DLS, A8287, A8284, A8290, D, DLS/UV, E, G11, HFP, M-SK, M-TK, S), produits de la marque SOCOMORE. L'industrie aéronautique en effet n'a pour le moment validé qu'un seul solvant, utilisé par l'ensemble des acteurs pour ce type d'opération.

Le système permet aux compagnons de « brosser » les pièces à nettoyer avec un apport contrôlé de solvant, mais contrairement à l'application au pinceau, le système récupère le produit souillé (solvant + copeaux + huile de coupe), le traite (filtration) et le réachemine à nouveau vers la brosse. Le solvant est donc recyclé ce qui nous permet d'économiser une grosse quantité de solvant. Les pièces nettoyées peuvent être métalliques ou en matériaux composites.

Le solvant utilisé ayant un point d'éclair très bas (30°C), le système ne doit pas dégager de source de chaleur excessive ni générer d'étincelles. Le dispositif selon l'invention est donc conçu de manière à respecter une norme ATEX (Atmosphères Explosives).

D'autres solvants existent mais leur utilisation n'est pas homologuée pour une telle utilisation dans le domaine de l'aéronautique. Par ailleurs, si le point d'éclair peut parfois être plus élevé et atteindre environ 110°C, la norme ATEX reste nécessaire. Si de nouveaux solvants présentant des points d'éclair plus élevés atteignant 300°C ou plus se révélaient utilisables, leur utilisation nécessiterai toutefois une mise au normes ATEX du dispositif utilisé. Le dispositif selon l'invention resterait donc tout à fait pertinent.

Voici les sécurités respectées par le système :
- Sécurité de construction « c » : appareils mécaniques à mouvement et friction reconnus sûrs pour éviter les échauffements et les étincelles.

Pour ce faire, la récupération du produit souillé par aspiration est réalisée grâce à un aspirateur alimenté par air comprimé. L'air comprimé ainsi qu'un phénomène venturi permet de réaliser une aspiration dépourvue d'alimentation électrique. En effet, le système ne possède aucun élément électrique de façon à éliminer les risques de déflagration qui pourraient être entrainés par ceux-ci. Ainsi l'aspiration est réalisée par un système de dépression à effet venturi alimenté par air comprimé.
- La pompe de transvasement 6 est également pneumatique. Aucun circuit électrique n'est présent et aucune électrovanne n'est utilisée.

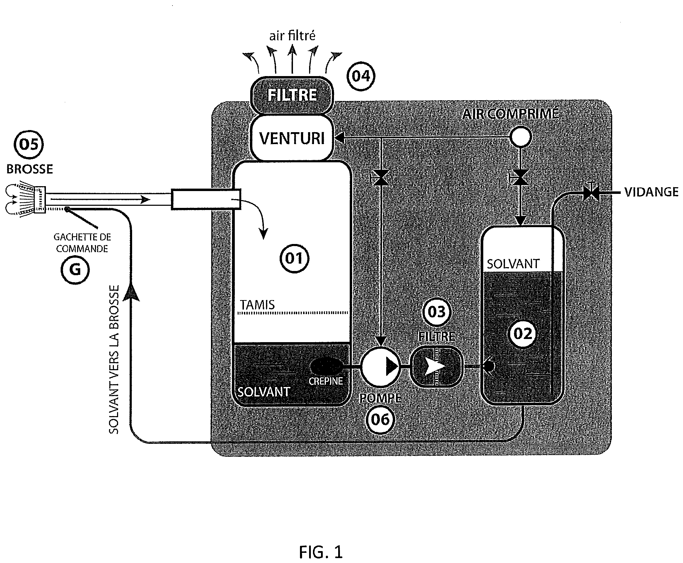

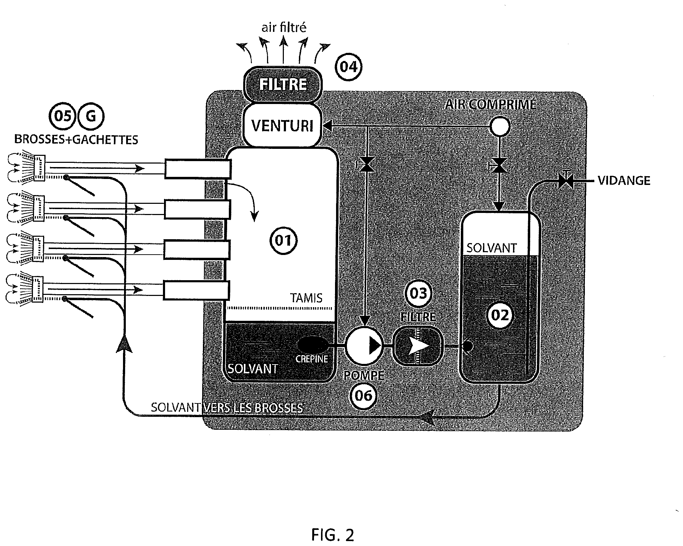

Le système se décline en deux versions :
- Un équipement monoposte (FIG. 1): Mobile, cet équipement est composé d'un appareil d'aspiration indépendant. Il est composé de l'ensemble des éléments fonctionnels afin de rendre l'appareil autonome. Concernant l'alimentation, cet appareil peut venir se raccorder à n'importe quelle source d'air comprimé.
- Un équipement multipostes (FIG. 2) : Fixe, cet équipement est composé d'un système d'aspiration général. Les compagnons peuvent venir raccorder plusieurs manchons d'aspiration sur le système.

En plus d'économiser du solvant en le récupérant, l'aspiration permet également de réduire sensiblement les émanations du solvant de nettoyage. En effet un système de filtre est utilisé afin de réduire le rejet de particules. Deux configurations sont possibles :
- Pour un équipement monoposte, l'air vicié est filtré en sortie d'aspirateur (filtre spécifique monté sur l'aspirateur). En effet, les émanations de solvant sont perturbantes voire nocives pour l'utilisateur. C'est pourquoi, le système filtre ces particules afin d'en dégager le moins possible et ainsi améliorer les conditions de travail des compagnons.
- Pour un équipement multipostes, l'air vicié est acheminé hors du bâtiment et/ou vers une filtration spécifique de grosse capacité. Le principe reste le même sauf que le système de filtration est centralisé et suffisamment dimensionné afin de pouvoir filtrer la totalité des particules.

Le système de nettoyage fonctionne de la manière suivante :
Tout d'abord, l'alimentation en air comprimé est reliée au système pour deux raisons :
- Alimenter le système de venturi afin de créer une aspiration dans la cuve principale 1 du système.
- Augmenter la pression dans le réservoir de solvant 2 afin de pouvoir l'envoyer sous pression à la brosse 5.

L'utilisateur vient alors se servir de l'appareil en libérant du solvant sur les pièces à nettoyer. Pour cela il actionne une gâchette G afin de libérer le solvant. Tout en nettoyant, le système aspire à travers la brosse 5 le solvant souillé. Il y a éventuellement présence de copeaux et d'huiles. Le mélange se retrouve dans la chambre principale 1 du système ou il est filtré grâce à un tamis. Les particules dues aux vapeurs de solvant lors de l'aspiration sont elles filtrées grâce à un filtre 4. Le solvant se retrouve alors au fond de la cuve principale 1. Une fois que tout le solvant présent à l'origine dans la réserve de solvant 2 se retrouve dans la cuve principale 1, un processus de transvasement est mis en marche. Une pompe pneumatique 6 est mise en marche, ce qui a pour effet de transvaser le solvant de la cuve principale 1 vers la réserve 2. Lors du transvasement, un filtre 3 est chargé de séparer les dernières impuretés du solvant. Ainsi le solvant dépourvu d'impuretés est de nouveau stocké dans le réservoir à solvant 2.

Le processus de recyclage est facultatif. Dans le cas où l'utilisateur souhaite maitriser finement les caractéristiques du solvant au moment de sa pulvérisation, le solvant souillé est simplement stocké avant évacuation. Son aspiration aura tout de même permis d'améliorer les caractéristiques de l'atmosphère de travail.

Dans le cas où aucun recyclage n'est effectué, la pompe pneumatique 6 et le filtre 3 sont supprimés.

Le dispositif de brossage se présente sous la forme d'un pistolet équipé de la brosse 5 dont la forme peut être variable en fonction de la complexité des zones à traiter. La brosse 5 peut être amenée à ressembler à un ovale, un rond, un carré, un rectangle, etc. La brosse 5 comporte plusieurs rangées de poils 7 qui permettent de balayer les copeaux ainsi que de faciliter le nettoyage des surfaces à traiter. Les poils 7 sont inclinés ce qui permet d'éviter leur aspiration et permet de dévier le flux de solvant qui imbibe les poils.

De plus un empiècement cylindrique 11 évite que les poils 7 ne se fassent aspirer et obstruent le conduit d'aspiration. Le solvant est acheminé grâce à un ou plusieurs orifices 8 entre les deux rangées de poils 7. De forme variable, les dimensions des trous pourront évoluer en fonction du débit d'écoulement souhaité. Le solvant circule dans une gorge 10 avant de s'écouler par le trou 8.

Tout en nettoyant, la brosse aspire le mélange souillé de produit à travers un conduit central 9.

Le produit utilisé étant corrosif, les joints habituellement utilisés dans ce domaine technique sont rapidement dégradés. Il a donc été nécessaire d'utiliser des joints spécifiques en élastomère perfluoré (FFKM : normes ISO 1629 et ASTM 1418) en particulier au niveau de la gâchette.

Enfin il a été constaté qu'une aspiration continue pendant le nettoyage pouvait générer une augmentation de la consommation en solvant.

Une commande de blocage de l'aspiration a donc été mise en place au voisinage de la gâchette. Un petit orifice a été ménagé laissant échapper en permanence un léger filet d'air. Lorsque l'opérateur bouche cet orifice avec son pouce il se produit une surpression qui est transmisse par un conduit à une vanne pneumatique dont la commande permet de bloquer l'alimentation en air du dispositif venturi, stoppant ainsi l'aspiration. Lorsque l'opérateur relève son pouce l'aspiration se poursuit.

Ce dispositif purement pneumatique est conforme aux normes ATEX et est de plus très rustique et très fiable.

## Revendications

1. Dispositif pneumatique de nettoyage de pièces aéronautiques après
usinage ou perçage, comportant un moyen pneumatique (6) de projection d'un solvant sur la pièce à nettoyer et un moyen pneumatique d'aspiration du liquide souillé par de l'huile, des copeaux et/ou des poussières, ladite aspiration étant réalisée par un système de dépression à effet venturi alimenté par air comprimé, la commande du dispositif étant pneumatique,
ledit dispositif formant un système qui permet d'apporter du solvant sur les pièces souillées puis d'aspirer le mélange, lorsque le solvant présente un point d'éclair inférieur ou égal à 300°C, sans utiliser de circuit électrique ni d'électrovanne.

2. Dispositif de nettoyage selon la revendication 1, **caractérisé en ce que** le solvant présente un point d'éclair inférieur ou égal à 110°C.

3. Dispositif de nettoyage selon la revendication 1 ou 2, **caractérisé en ce qu'**il comprend un moyen de filtration (3) du liquide souillé permettant la filtration du liquide souillé avant son stockage.

4. Dispositif de nettoyage selon la revendication 3, **caractérisé en ce qu'**il comprend un circuit fermé permettant au liquide souillé, une fois retraité par filtration, d'être réutilisé par le moyen de projection.

5. Dispositif de nettoyage selon l'une quelconque des revendications précédentes, **caractérisé en ce que** le moyen de projection comprend un pistolet équipé d'une gâchette (G), l'actionnement de la gâchette (G) permettant la projection du liquide.

6. Dispositif de nettoyage selon la revendication 5, **caractérisé en ce que** le pistolet comprend une pluralité de poils (7) formant brosse (5), le jet de liquide issu du pistolet étant dirigé vers les poils (7).

7. Dispositif de nettoyage selon la revendication 5 ou 6, **caractérisé en ce que** le moyen d'aspiration comprend un conduit (9) prévu sur le pistolet équipé de la brosse (5).

8. Dispositif de nettoyage selon l'une quelconque des revendications précédentes, **caractérisé en ce que** l'air expulsé du dispositif est filtré avant son rejet dans l'atmosphère.

9. Dispositif de nettoyage selon l'une quelconque des revendications 5 à 8, **caractérisé en ce qu'**il comprend une commande, situé au voisinage de la gâchette, permettant de piloter un arrêt de l'aspiration.

10. Dispositif de nettoyage selon la revendication 9, **caractérisé en ce que** la commande comprend un orifice laissant échapper en permanence un léger filet d'air dont le bouchage provoque une surpression qui est transmise par un conduit à une vanne pneumatique dont la commande permet de bloquer l'alimentation en air du dispositif venturi, la surpression provoquant l'arrêt de l'aspiration.

11. Dispositif de nettoyage selon l'une quelconque des revendications précédentes, **caractérisé en ce que** la gâchette comprend au moins un joint à base d'Elastomère perfluoré.

## Patentansprüche

1. Pneumatische Vorrichtung zur Reinigung von Luftfahrtteilen nach der Bearbeitung oder dem Bohren, mit
einer pneumatischen Einrichtung (6) zum Spritzen eines Lösungsmittels auf das zu reinigende Teil, und einer pneumatischen Einrichtung zum Ansaugen der durch Öl, Späne und/oder Stäube verschmutzten Flüssigkeit, wobei das Ansaugen durch ein mit Druckluft gespeistes Venturieffekt-Unterdrucksystem erfolgt, wobei die Steuerung der Vorrichtung pneumatisch ist,
wobei die Vorrichtung ein System bildet, welches ermöglicht, Lösungsmittel auf die verschmutzten Teile aufzubringen und danach die Mischung anzusaugen, wenn das Lösungsmittel einen Flammpunkt unter oder gleich 300°C aufweist, ohne eine elektrische Schaltung oder ein elektromagnetisches Ventil zu verwenden.

2. Reinigungsvorrichtung nach Anspruch 1, **dadurch gekennzeichnet, dass** das Lösungsmittel einen Flammpunkt unter oder gleich 110°C aufweist.

3. Reinigungsvorrichtung nach Anspruch 1 oder 2, **dadurch gekennzeichnet, dass** sie eine Einrichtung (3) zum Filtern der verschmutzten Flüssigkeit aufweist, die das Filtern der verschmutzten Flüssigkeit vor deren Lagerung ermöglicht.

4. Reinigungsvorrichtung nach Anspruch 3, **dadurch gekennzeichnet, dass** sie einen geschlossenen Kreislauf aufweist, der die Wiederverwendung der verschmutzten Flüssigkeit mittels der Spritzeinrichtung ermöglicht, sobald diese durch Filtern wiederaufbereitet ist.

5. Reinigungsvorrichtung nach einem der vorhergehenden Ansprüche, **dadurch gekennzeichnet, dass** die Spritzeinrichtung eine mit einem Abzugshebel (G) versehene Pistole aufweist, wobei die Betätigung des Abzugshebels (G) das Spritzen der Flüssigkeit ermöglicht.

6. Reinigungsvorrichtung nach Anspruch 5, **dadurch gekennzeichnet, dass** die Pistole mehrere Borsten (7), die eine Bürste (5) bilden, aufweist, wobei der aus der Pistole ausgegebene Flüssigkeitsstrahl in Richtung der Borsten (7) gerichtet ist.

7. Reinigungsvorrichtung nach Anspruch 5 oder 6, **dadurch gekennzeichnet, dass** die Saugeinrichtung eine Leitung (9) aufweist, die an der mit der Bürste (5) versehenen Pistole vorgesehen ist.

8. Reinigungsvorrichtung nach einem der vorhergehenden Ansprüche, **dadurch gekennzeichnet, dass** aus der Vorrichtung ausgestoßene Luft vor deren Abgabe in die Atmosphäre gefiltert wird.

9. Reinigungsvorrichtung nach einem der Ansprüche 5 bis 8, **dadurch gekennzeichnet, dass** sie eine nahe dem Abzugshebel befindliche Steuerung aufweist, welche es ermöglicht, das Unterbrechen des Ansaugens zu steuern.

10. Reinigungsvorrichtung nach Anspruch 9, **dadurch gekennzeichnet, dass** die Steuerung eine Öffnung, die das kontinuierliche Austreten eines Luftstroms ermöglicht, aufweist, deren Verstopfung einen Überdruck verursacht, der über eine Leitung an ein pneumatisches Ventil übertragen wird, dessen Steuerung ermöglicht, die Luftzufuhr der Venturivorrichtung zu blockieren, wobei der Überdruck die Unterbrechung des Ansaugens bewirkt.

11. Reinigungsvorrichtung nach einem der vorhergehenden Ansprüche, **dadurch gekennzeichnet, dass** der Abzugshebel mindestens eine Dichtung auf Perfluorelastomerbasis aufweist.

## Claims

1. A pneumatic device for cleaning aeronautical parts after machining or piercing, said device comprising a pneumatic means for spraying a solvent on the part to be cleaned and a pneumatic means for aspirating the oil-soiled liquid, chips and/or dust, the aspiration being carried out by a venturi-effect vacuum system supplied by compressed air, the control of the device being pneumatic,
said device realising a system which makes it possible to bring solvent to the soiled parts and then to aspirate the mixture, when the solvent has a flash point below or equal to 300°C, without using electric circuit nor solenoid valve.

2. The cleaning device according to claim 1, **characterized in that** the solvent has a flash point below or equal to 110°C.

3. The cleaning device according to claim 1 or 2, **characterized in that** said cleaning device comprising a means for filtering (3) the soiled liquid allowing the filtration of the soiled liquid before it is stored.

4. Cleaning device according to claim 3, **characterized in that** said device comprising a closed circuit allowing the soiled liquid, once retreated by filtration, to be reused by the spraying means.

5. The cleaning device according to any one of the preceding claims, **characterized in that** the spraying means comprises a gun fitted with a trigger (G), the actuation of the trigger (G) allowing the spraying of the liquid.

6. The cleaning device according to claim 5, **characterized in that** the gun comprises a plurality of bristles (7) forming a brush (5), the jet of liquid originating from the gun being directed toward the bristles (7).

7. The cleaning device according to claim 5 or 6, **characterized in that** the aspiration means comprises a duct (9) provided on the gun fitted with the brush (5).

8. The cleaning device according to any one of the preceding claims, **characterized in that** the air expelled from the device is filtered before it is discharged into the atmosphere.

9. The cleaning device according to any one of the preceding claims, **characterized in that** it comprises a control, situated in the vicinity of the trigger, making it possible to control a stoppage of the aspiration.

10. The cleaning device according to claim 10, wherein the control comprises an orifice allowing a slight stream of air to escape at all times the blocking of which causes an overpressure which is transmitted via a duct to a pneumatic valve the control of which makes it possible to stop the air supply of the venturi device, the overpressure causing the aspiration to stop.

11. The cleaning device according to any one of the preceding claims, **characterized in that** the trigger comprises at least one perfluorinated elastomer-based seal.
